# EUROPÄISCHE PATENTANMELDUNG

(11) **EP 2 243 730 A1**
(43) Veröffentlichungstag der Anmeldung: **27.10.2010**
(21) Anmeldenummer: 09004109.6
(22) Anmeldetag: 23.03.2009
(51) Int. Cl.: B65G 19/02, B65G 54/02

(54) **Fördervorrichtung**

(71) Anmelder: Berger Feinmechanik GmbH, 88046 Friedrichshafen (DE)
(72) Erfinder: Skronn, Ulrich, 88046 Friedrichshafen (DE)

(57) **Zusammenfassung**

Bei einer Fördervorrichtung (1) mit einem zwischen zwei Umlenkrollen (2) umlaufend geführt gehaltenen Antriebsband (3), das von einem Motor (21) in eine Förderrichtung (7) antreibbar ist, mit einem das Antriebsband (3) teilweise umgreifenden Gehäuse (4) , dessen Außenseite als Auflagefläche (24) für magnetisch leitende Körper (8) dient, und mit einem oder mehreren an dem Antriebsband (3) befestigten Permanentmagneten (6) , deren jeweiliges Magnetfeld senkrecht zu dem Gehäuse (4) ausgerichtet ist, sollen nicht nur magnetisch sondern vielmehr auch magnetisch nicht leitende Stoffe oder Körper transportierbar sein. Dies wird dadurch erreicht, dass auf die Auflagefläche (24) des Gehäuses (4) eine oder mehrere Förderleisten (11) oder Behälter angeordnet sind, in die jeweils ein oder mehrere Haltemagnete (12), bei Verwendung von Behältern als Transportmittel vorzugsweise in deren Boden, eingesetzt ist bzw. sind, und dass die Permanentmagnete (6) des Antriebsbandes (4) und die Haltemagnete (12) der jeweiligen Förderleiste (11) bzw. des Behälters ein gemeinsames Magnetfeld mit korrespondierender Polung bilden und sich gegenseitig durch das Gehäuse (4) anziehen.

## Beschreibung

Die Erfindung bezieht sich auf eine Fördervorrichtung nach dem Oberbegriff des Patentanspruches 1.

Solche Fördervorrichtungen werden seit einigen Jahren als Transporthilfen für magnetisch leitende Kleinteile, beispielsweise Metallspäne, verwendet, um die bei einer Bearbeitung anfallenden Metallspäne von dem Bearbeitungszentrum möglichst schnell und unkompliziert weg transportieren zu können. Die Fördervorrichtungen bestehen hierbei aus einem magnetisch nicht leitenden Gehäuse, auf dem das zu fördernde Gut aufgeschüttet wird.

Die Außenseite des Gehäuses dient demnach als Auflagefläche für das abzutransportierende Gut. Unterhalb des Gehäuses ist eine Antriebseinrichtung angeordnet, die aus zwei zueinander beabstandeten Umlenkrollen und einem an den Umlenkrollen umlaufend geführt gehaltenen Antriebsband besteht.

Auf der Außenseite des Antriebsbandes, also dem Gehäuse zugewandt, sind an diesem eine Vielzahl von Permanentmagneten befestigt. Wenn nunmehr das Antriebsband und die Permanentmagnete in Rotation versetzt werden, wird das senkrecht auf das Gehäuse einwirkende Magnetfeld, das von dem Permanentmagneten erzeugt wird, in Bewegung versetzt. Die auf der Auflagefläche des Gehäuses aufgebrachten magnetisch leitenden Späne werden somit von dem Magnetfeld des jeweiligen Permanentmagneten erfasst und entlang der Auflagefläche gezogen und vom Anfang der Förderstrecke zu einem Ende der Förderstrecke transportiert und dort beispielsweise mittels einer Abstreifleiste von der Auflagefläche des Gehäuses gelöst.

Als nachteilig bei diesen Fördervorrichtungen hat sich herausgestellt, dass magnetisch nicht leitende Güter oder Stoffe nicht von solchen Fördervorrichtungen mittels Permanentmagneten abtransportiert werden können, da die Magnetfelder der Permanentmagnete auf solche Stoffe keine Kräfte ausüben können.

Für magnetisch nicht leitende Güter oder Stoffe werden üblicherweise Kettenförderer eingesetzt, an denen Schaufeln, Leisten, Fächer oder dergleichen angebracht sind, in die diese Stoffe eingefüllt werden.

Als nachteilig bei solchen Fördervorrichtungen hat sich herausgestellt, dass die Stoffe in den Zwischenräumen der einzelnen Kettenglieder gelangen und dort eindringen, wodurch die Beweglichkeit der Kettenglieder relativ zueinander beeinträchtigt ist. Derartige Verschmutzungen bzw. Verunreinigungen der Kettenglieder zu säubern, erfordert einen enormen zeitlichen Aufwand; oftmals sind auch einzelne Kettenglieder aufgrund des Verschleißes und Abriebes unbrauchbar geworden, so dass diese auszuwechseln sind. Dies führt jedoch zu ungewünschten Stillstandszeiten der Kettenförderer.

Bei den herkömmlichen Fördervorrichtungen, die mittels Permanentmagneten ein Magnetfeld erzeugen, durch das magnetisch leitende Stoffe, beispielweise Metallspäne, abtransportiert werden können, ist des Weiteren als nachteilig anzusehen, dass das das Antriebsband umgebende Gehäuse lediglich teilweise aus einem magnetisch nicht leitenden Material besteht, denn die Unterseite des Gehäuses wird oftmals aus Stahl oder einem anderen magnetisch leitenden Metall gefertigt, um Produktionskosten für das Gehäuse einzusparen. Eine vollständige Kapselung des Antriebsbandes mit einem Gehäuse aus einem einheitlichen magnetisch nicht leitenden Material ist nämlich bei den herkömmlichen bekannten Fördervorrichtungen nicht notwendig, denn die abzutransportierenden Metallspäne oder dergleichen werden ausschließlich auf der nach oben weisenden Außenfläche des Gehäuses aufgebracht und dort bewegt.

Es ist daher Aufgabe der Erfindung, eine Fördervorrichtung der eingangs genannten Gattung bereitzustellen, mittels der sowohl magnetisch leitende als auch magnetisch nicht leitende Körper, Stoffe oder dergleichen zuverlässig über die Auflagefläche des Gehäuses transportiert bzw. bewegt werden können. Des Weiteren ist es Aufgabe der Erfindung, ein Gehäuse für die Fördervorrichtung bereit zu stellen, durch das das Antriebsband vollständig nach außen gekapselt ist, so dass keine Verunreinigungen an dieses gelangen können.

Diese Aufgaben werden erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass durch die Permanentmagnete ein Magnetfeld, das auf die Außenseite des Gehäuses Magnetkräfte ausübt, vorhanden ist, und in diesem Magnetfeld das Magnetfeld eines Haltemagneten mit dazu korrespondierender Polung eingebracht ist, wird eine zuverlässige und hohe Anpresskraft zwischen dem Permanentmagneten des Antriebsbandes und dem Haltemagneten, der in die jeweilige Förderleiste eingesetzt ist, erzielt.

Dies führt dazu, dass die Förderleiste parallel zu der Auflagefläche des Gehäuses verlaufende Kräfte aufnehmen und abstützen kann, so dass über die Förderleisten nicht magnetisch leitende Stoffe, beispielsweise Aluminiumspäne, bewegt werden können. Auch schüttgutfähige Materialien sind durch die Förderleisten transportierbar, wenn nämlich an diesen eine Dichtlippe angebracht ist, die unter Vorspannung auf der Auflagefläche des Gehäuses anliegt, denn dadurch werden die Partikel des Schüttgutes aufgenommen und gelangen nicht zwischen die Förderleiste und der Auflagefläche.

Um die Reibung zwischen der Förderleiste und der Auflagefläche möglichst gering zu halten, kann die Auflagefläche mit einem Material beschichtet sein, dessen Reibungskoeffizient gering ist, oder an der der Auflagefläche zugewandten Auflagefläche der Förderleiste ist eine Schicht, beispielsweise aus Kunststoff, aufgebracht, durch die die Förderleiste und die darin eingesetzten Haltemagnete abgedeckt sind, so dass diese nicht in unmittelbarem Reibkontakt mit der Auflagefläche des Gehäuses stehen.

Es ist besonders vorteilhaft, wenn die Permanent- und die Haltemagnete aus einem NdFeB-Magnet aufgebaut sind, denn durch diese wird eine Haltekraft von etwa 1000 Newton bei einer Berührungsfläche zwischen den Permanentmagneten und dem Haltemagneten von etwa 1800 mm² erzielt.

Aufgrund der hohen Haltekraft der einzelnen von den Permanentmagneten und den Haltemagneten erzeugten Magnetfeldern und der Möglichkeit eine Vielzahl solcher Magnete nebeneinander oder übereinander anzuordnen, um deren Magnetflussdichte und damit die Magnethaltekraft zu erhöhen, ohne dass sich deren Magnetfelder negativ beeinflussen, können hohe Querkräfte aufgenommen werden, so dass das Antriebsband auch als Antriebseinrichtung, beispielsweise nach Art eines Kettentriebes für Fahrzeuge, verwendet werden kann.

In der Zeichnung sind zwei erfindungsgemäße Ausführungsbeispiele einer Fördervorrichtung und deren Verwendung sowie der Einsatz der Fördervorrichtung als Antriebseinrichtung an einem Fahrzeuggestell dargestellt, die nachfolgend näher erläutert werden. Im Einzelnen zeigt:
- Figur 1a: ein erstes Ausführungsbeispiel der Fördervorrichtung mit einem in ei- nem vollständig geschlossenen Gehäuse angeordneten Antriebsband, an dem zehn Permanentmagnete gehalten sind, deren Magnetfeld je- weils gemeinsam mit einem auf der Außenseite des Gehäuses aufge- brachten Haltemagneten zusammenwirkt, in Seitenansicht,
- Figur 1b: ein zweites Ausführungsbeispiel der Fördervorrichtung mit einem in einem teilweise geöffneten Gehäuse angeordneten Antriebsband, an dem zehn Permanentmagnete befestigt sind, deren Magnetfelder durch das Gehäuse nach außen abstrahlen und jeweils gemeinsam mit einem auf der Außenseite des Gehäuses aufgelegten Haltemagneten ein ge- meinsames Magnetfeld bilden,
- Figur 2a: die Fördervorrichtung gemäß Figur 1 a in Draufsicht,
- Figur 2b: die Fördervorrichtung gemäß Figur 1a, wobei die beiden die jeweilige Förderleiste abstützenden Antriebsbänder mit einer unterschiedlichen Rotationsgeschwindigkeit angetrieben sind,
- Figur 3: einen Schnitt entlang der Schnittlinie III-III der Figur 1a,
- Figur 4a: eine vergrößerte Darstellung eines an dem Antriebsband gemäß Figur 1 a angebrachten Aufnahmekörpers, in dem die Permanent- magnete eingesetzt sind,
- Figur 4b: einen Schnitt durch den Aufnahmekörper entlang der Schnittlinie IVb-IVb der Figur 4a,
- Figur 5a: ein Ausführungsbeispiel der Fördervorrichtung als Antriebseinrichtung eines Fahrzeuges, in Seitenansicht, und
- Figur 5b: das Fahrzeuggestell gemäß Figur 5a in Draufsicht.

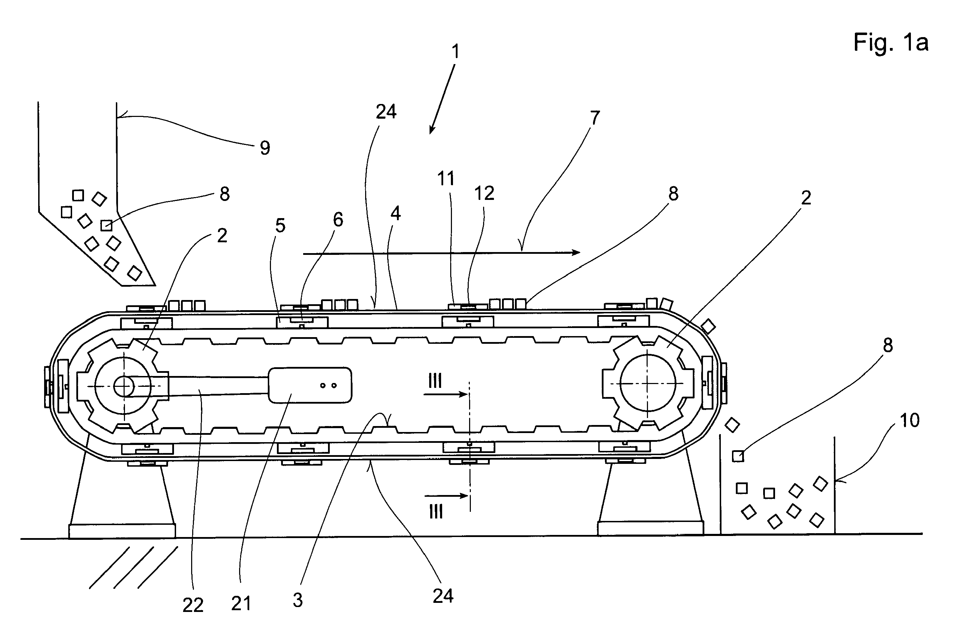

Die in Figur 1a abgebildete Fördereinrichtung 1 besteht aus einem Antriebsband 3, das über zwei Umlenkrollen 2 umlaufend geführt gehalten ist. Auf der nach außen weisenden Oberfläche des Antriebsbandes 3 sind, z. B. in Aufnahmekörper 5 eingesetzte zehn Permanentmagnete 6 befestigt, deren Magnetfelder senkrecht zu der mit der Bezugsziffer 7 angegebenen Förderrichtung des Antriebsbandes 3 ausgerichtet sind. Die Umlenkrollen 2 und das Antriebsband 3 sind im Inneren eines Gehäuses 4 angeordnet, dessen Querschnitt als Kastenprofil ausgebildet ist. Die beiden seitlichen Stirnseiten des Gehäuses 4 weisen halbkreisförmige Außenkonturen auf, die an die Durchmesser der Umlenkrollen 2 angepasst sind.

Durch die Rotation des Antriebsbandes 3 bewegen sich die durch das Gehäuse 4 abgestrahlten Magnetfelder senkrecht zu diesem. Dabei ist die Außenseite des Gehäuses 4 als Auflagefläche 24 vorgesehen, auf der magnetisch leitende oder magnetisch nicht leitende Körper 8 oder Stoffe oder dgl. aufgebracht sind. Die Körper 8 werden in einem Ausgabebehälter 9 gelagert und von diesem auf die Auflagefläche 24 des Gehäuses 4 abgegeben. Dies ist als Anfang der Förderstrecke anzusehen.

Um magnetisch nicht leitende Körper 8 transportierten zu können, sind auf der Außenseite des Gehäuses 4 zehn Förderleisten 11 aufgelegt, in denen z. B. drei Haltemagnete 12 eingesetzt sind. Die Haltemagnete 12 weisen die gleiche Nord- / Süd-Polung wie die Permanentmagnete 6 auf, so dass sich die Permanentmagnete 6 und die Haltemagnete 12 durch das Gehäuse 4 gegenseitig anziehen.

Dadurch werden die Förderleisten 11 auf die Außenseite des Gehäuses 4 gedrückt; die Förderleisten 11 können somit parallel zu der Außenseite des Gehäuses 4 verlaufende Kräfte aufnehmen und abstützen. Bezogen auf die Förderrichtung 7 werden sämtliche Körper 8, die vor der jeweiligen Förderleiste 11 auf der Auflagefläche 24 aufgebracht sind, über die Auflagefläche 24 von Anfang der Förderstrecke bis zu deren Ende transportiert.

Im Bereich der halbkreisförmigen Außenkontur des Gehäuses 4 fallen die Körper 8 von diesem aufgrund der herrschenden Schwerkraft in einen Sammelbehälter 10.

Die jeweilige Förderleiste 11 wird durch den Permanentmagneten 6 auf der Unterseite des Gehäuses 2 zurück zum Anfang der Förderstrecke gefahren.

Zum Antrieb einer der Umlenkrollen 2 ist ein Motor 21 vorgesehen, der im Inneren des Gehäuses 4 angeordnet ist und über eine Antriebswelle 22 in kraftschlüssiger Wirkverbindung mit der Umlenkrolle 2 steht.

Durch das Gehäuse 4 sind somit das Antriebsband 3 und die Umlenkrollen 2 vollständig nach außen dicht verschlossen, so dass Verunreinigungen an diese Bauteile nicht gelangen können. Das Antriebsband 3 ist im gezeigten Ausführungsbeispiel als Zahnriemen ausgestaltet; es ist jedoch auch möglich, das Antriebsband 3 als Kette, bestehend aus einer Vielzahl von einzelnen Kettengliedern, die zusammengefügt sind, auszugestalten.

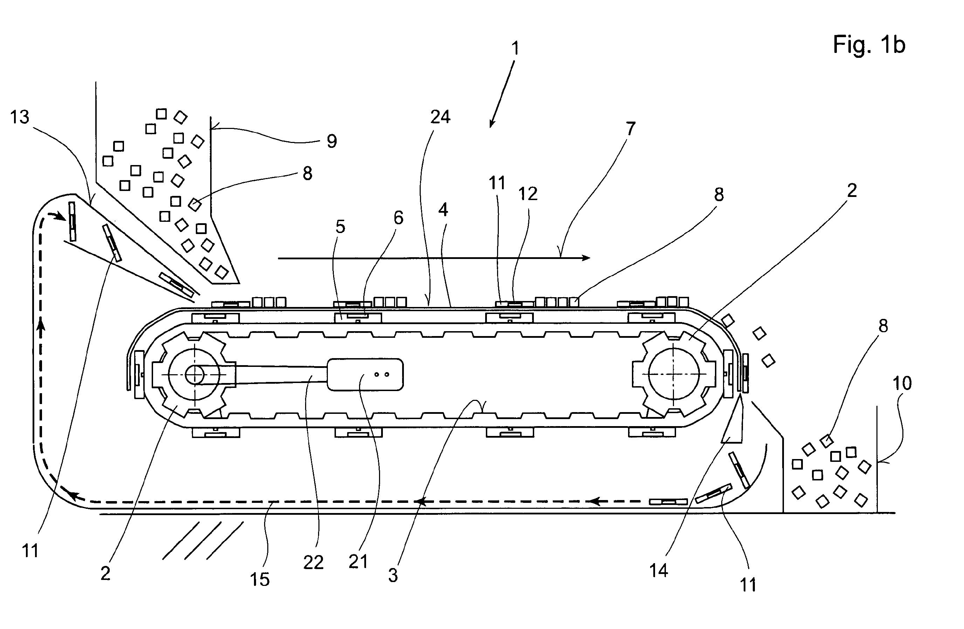

Gemäß Figur 1b ist die Fördervorrichtung 1 mit einem Sammelbehälter 10 für die Körper 8 versehen. Die Förderleisten 11 werden nämlich am Ende der Förderstrecke durch eine Abstreifleiste 14 von der Auflagefläche 24 getrennt und über ein Transportband 15 zurück an den Anfang der Förderstrecke gebracht, die Körper 8 fallen dagegen in den Sammelbehälter 10. Die Förderleisten 11 werden mittels einer Zuführeinrichtung 13, die schematisch dargestellt ist, wiederum auf die Auflagefläche 24 des Gehäuses 4 aufgelegt. Sobald ein an dem Antriebsband 3 befestigter Permanentmagnet 6 unterhalb der jeweiligen aufgesetzten Förderleiste 11 gelangt, führt die gegenseitige Anziehung des Permanentmagneten 6 und des Haltemagneten 12 in der Förderleiste 11 dazu, dass die Förderleiste 11 über die Auflagefläche 24 bewegt wird. Das vor der Förderleiste 11 auf der Auflagefläche 24 aufgebrachte Schüttgut oder die einzelnen Körper 8 werden von dieser vom Anfang der Förderstrecke in Förderrichtung 7 zum Ende der Förderstrecke transportiert.

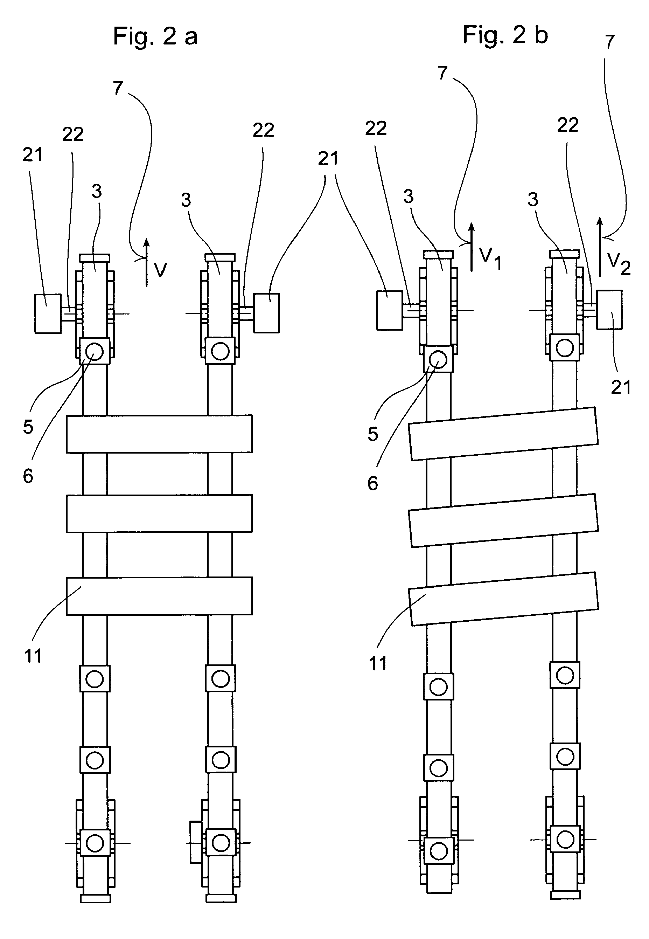

Aus den Figuren 2a und 2b kann entnommen werden, dass die Fördervorrichtung 1 gemäß Figur 1a aus zwei Antriebsbändern 3 aufgebaut sind. Die beiden benachbarten und räumlich voneinander getrennten Antriebsbänder 3 tragen die Permanentmagnete 6, durch die die Haltemagnete 12 und folglich die Förderleisten 11 auf die Auflagefläche 24 des Gehäuses 4 gedrückt werden. Im Ausgangszustand sind die Permanentmagnete 6 der beiden Antriebsbänder 3 zueinander fluchtend ausgerichtet und die Antriebsbänder 3 werden über zwei voneinander getrennte Motoren 21 synchron angetrieben.

Wenn nunmehr einer der beiden Motoren 21 kurzfristig mit einer unterschiedlichen Geschwindigkeit v₁ im Vergleich mit der Rotationsgeschwindigkeit v₂ des anderen Antriebsbandes 3 angetrieben ist, verlaufen die Permanentmagnete 6 der beiden Antriebsbänder 3 nicht mehr synchron zueinander und die Förderleisten 11 werden ausgelenkt. Dies führt dazu, dass die Förderleisten 11 nicht mehr senkrecht zu der Förderrichtung 7 ausgerichtet sind, sondern in einem bestimmten einstellbaren Winkel ausgelenkt werden. Somit kann der von der Förderleisten 11 bewegte Körper 8 seitlich von der Auflagefläche 24 nach Art eines Pfluges verschoben und von der Auflagefläche 24 herunter geschoben werden.

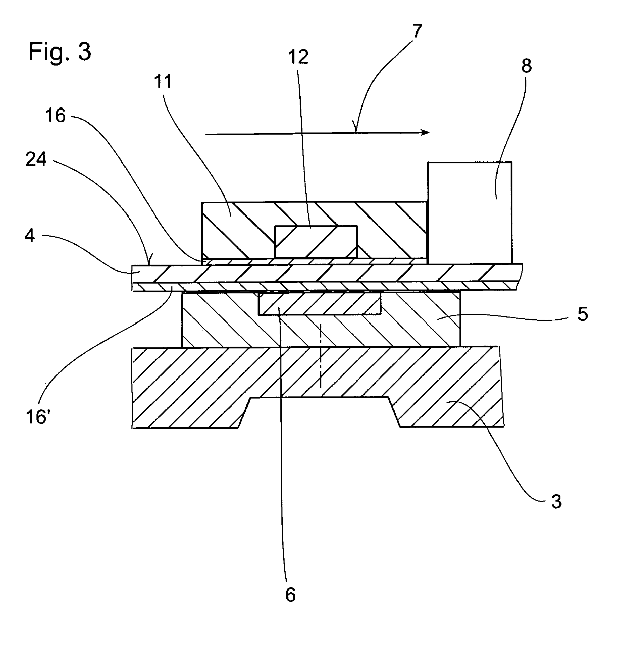

Aus Figur 3 ist die Anordnung der Permanentmagneten 6 und der Haltemagneten 12 in vergrößerter Darstellung zu entnehmen. Des Weiteren ist auf der der Auflagenfläche 24 des Gehäuses 4 zugewandten Unterseite der Förderleiste 11 eine Schicht 16 angebracht, so dass weder die Förderleiste 11 noch der in diese eingesetzte Haltemagnet 12 in unmittelbarem Reibkontakt mit der Auflagefläche 24 des Gehäuses 4 gelangen. Die Schicht 16 weist einen möglichst geringen Reibungskoeffizienten bezogen auf das Gehäuse 4 auf und ist als Kunststoff mit guten Gleiteigenschaften auf Edelstahl ausgestattet. Durch diese konstruktive Maßnahme wird folglich die Reibung zwischen der Förderleiste 11 und dem Gehäuse 4 klein gehalten.

Zwischen dem Gehäuse 4 und dem den Permanentmagneten 6 aufnehmenden Aufnahmekörper 5 ist eine weitere Schicht 16 vorgesehen, die an der Innenfläche des Gehäuses 4 angebracht ist. Sollte nämlich aufgrund von Schwingungen oder sonstigen Erschütterungen das Antriebsband 3 ausgelenkt werden und dadurch der Aufnahmekörper 5 und der Permanentmagnet 6 mit dem Gehäuse 4 in Berührung treten, könnte dies unnötige Reibung erzeugen, die den Wirkungsgrad der Fördervorrichtung 1 verringert. Die Schicht 16 an dem Gehäuse 4 weist ebenfalls einen möglichst geringen Reibungskoeffizienten auf.

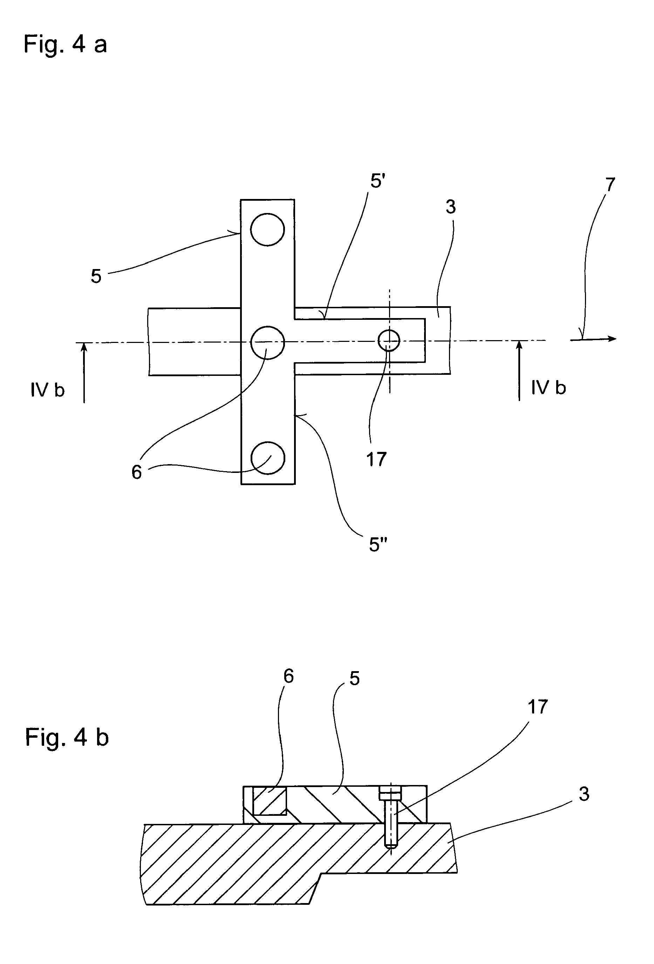

In den Figuren 4a und 4b ist der Aufnahmekörper 5 vergrößert abgebildet. Die Querschnittsfläche des Aufnahmekörpers 5 ist T-förmig ausgestaltet. Der erste Schenkel 5' des Aufnahmekörpers 5 ist über eine Befestigungsschraube 17 mit dem Antriebsband 3 verbunden. In den zweiten Schenkel 5" des Aufnahmekörpers 5 sind drei Öffnungen eingearbeitet, in die jeweils einer der Permanentmagnete 6 eingesetzt sind.

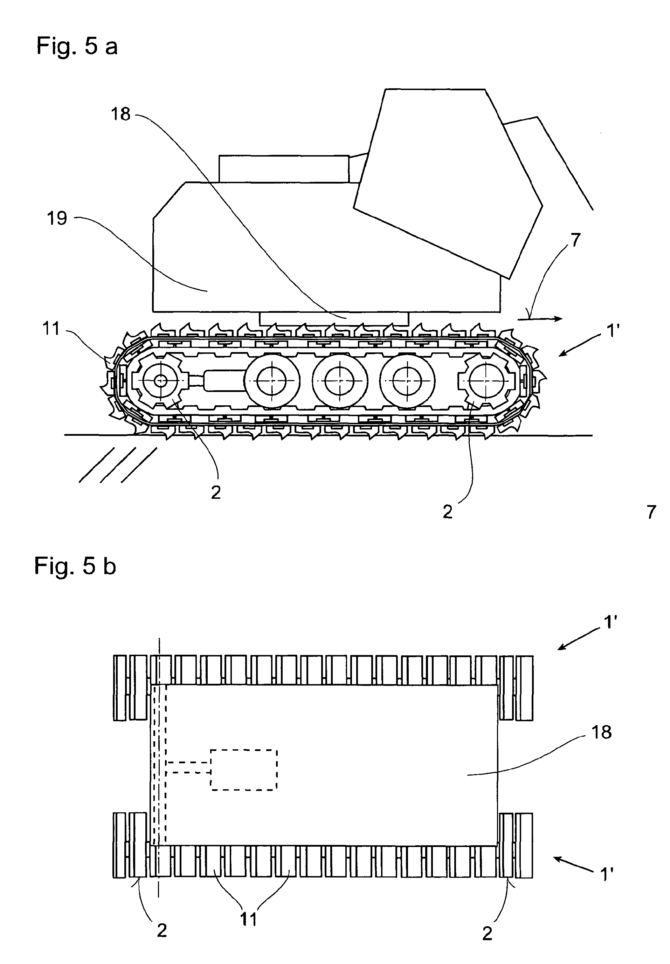

Aus den Figuren 5a und 5b ist eine andersartige Anwendung der Fördervorrichtung 1' zu entnehmen. Auf der nach außen weisenden Oberfläche des Antriebsbandes 3 sind nunmehr eine Vielzahl von Permanentmagneten 6 angeordnet, die die als Dorne, Platten oder dgl. ausgebildete Förderleisten 11 anziehen, denn in diesen sind die Haltemagnete 12 eingesetzt.

Diese Fördervorrichtung 1' schiebt demnach das Gehäuse 4 bezogen auf den Boden in die Förderrichtung 7.

In Figur 5b ist gezeigt, dass zwischen zwei zueinander beabstandeten Gehäusen 4 ein Fahrzeuggestell 18 angebracht ist, auf dem der Aufbau 19 des Fahrzeuges befestigt ist. Die beiden voneinander getrennten Fördervorrichtungen 1' bilden demnach gemeinsam eine Antriebseinrichtung für das Fahrzeuggestell 18.

## Patentansprüche

1. Fördervorrichtung (1) mit einem zwischen zwei Umlenkrollen (2) umlaufend geführt gehaltenen Antriebsband (3), das von einem Motor (21) in eine Förderrichtung (7) antreibbar ist, mit einem das Antriebsband (3) teilweise umgreifenden Gehäuse (4) , dessen Außenseite als Auflagefläche (24) für magnetisch leitende Körper (8) dient, und mit einem oder mehreren an dem Antriebsband (3) befestigten Permanentmagneten (6) , deren jeweiliges Magnetfeld senkrecht zu dem Gehäuse (4) ausgerichtet ist,
**dadurch gekennzeichnet,**
**dass** auf die Auflagefläche (24) des Gehäuses (4) eine oder mehrere Förderleisten (11) oder Behälter angeordnet sind, in die jeweils ein oder mehrere Haltemagnete (12), bei Verwendung von Behältern als Transportmittel vorzugsweise in deren Boden, eingesetzt ist bzw. sind, und dass die Permanentmagnete (6) des Antriebsbandes (4) und die Haltemagnete (12) der jeweiligen Förderleiste (11) bzw. des Behälters ein gemeinsames Magnetfeld mit korrespondierender Polung bilden und sich gegenseitig durch das Gehäuse (4) anziehen.

2. Fördervorrichtung nach Anspruch 1,
**dadurch gekennzeichnet,**
**dass** die Förderleisten (11) am Anfang der Förderstrecke durch eine Zuführeinrichtung (13) auf die Auflagefläche (24) des Gehäuses (4) aufsetzbar und durch eine Abstreifleiste (14) am Ende der Förderstrecke von dieser abtrennbar sind.

3. Fördervorrichtung nach Anspruch 1 oder 2,
**dadurch gekennzeichnet,**
**dass** durch das Gehäuse (4) das Antriebsband (3) in Förderrichtung (7) vollständig umlaufend verschlossen ist und dass die auf der Auflagefläche (24) des Gehäuses (4) aufliegenden Förderleisten (11) bzw. Behälter durch die Permanentmagnete (6) an den vier Auflageflächen (24) des Gehäuses (4) gehalten und synchron zu diesem in Bewegung versetzt sind.

4. Fördervorrichtung nach Anspruch 3,
**dadurch gekennzeichnet,**
**dass** das Gehäuse (4) im Querschnitt als Kastenprofil ausgestaltet ist und dass die beiden seitlichen Stirnseiten des Kastenprofiles eine halbkreis-, elliptisch- oder bogenförmige Außenkontur aufweisen.

5. Fördervorrichtung nach Anspruch 3 oder 4,
**dadurch gekennzeichnet,**
**dass** durch das Gehäuse (4) das Antriebsband (3) vollständig nach außen verschlossen ist und dass der Motor (21) im von dem Gehäuse (4) gebildeten Innenraum angeordnet ist oder dass der Motor (21) mittels einer Antriebswelle (22), eines Kardangelenkes oder eines Antriebsriemens, die jeweils seitlich neben dem Antriebsband in den Innenraum des Gehäuses (4) eingeführt sind, in kraftschlüssiger Wirkverbindung steht.

6. Fördervorrichtung nach einem oder mehreren der vorgenannten Ansprüche,
**dadurch gekennzeichnet,**
**dass** das Gehäuse (4) aus einem magnetisch nicht leitenden Werkstoff, vorzugsweise aus Kunststoff, Aluminium oder Edelstahl, hergestellt ist.

7. Fördervorrichtung nach einem oder mehreren der vorgenannten Ansprüche,
**dadurch gekennzeichnet,**
**dass** die Permanentmagnete (6) des Antriebsbandes (3) und die Haltemagnete (12) der Förderleiste (11) als NdFeB-Magnete ausgebildet sind.

8. Fördervorrichtung nach einem oder mehreren der vorgenannten Ansprüche,
**dadurch gekennzeichnet,**
**dass** auf der den Förderleisten (11) zugewandten Auflageflächen (24) des Gehäuses (4) eine Kunststoffschicht (16) aufgebracht ist, durch die die Förderleiste (11) und der in die Förderleiste (11) bzw. den Behälter eingesetzte Haltemagnet (12) gegenüber der Auflagefläche (24) des Gehäuses (4) abgedeckt sind, und/oder dass auf der die Permanentmagneten (6) tragenden Aufnahmekörper (5) zugewandten Flächen des Gehäuses (4) eine Kunststoffschicht (16') aufgebracht ist, und dass die Kunststoffschichten (16, 16') einen möglichst geringen Reibungskoeffizienten mit der Auflagefläche (24) aufweisen.

9. Fördervorrichtung nach einem oder mehreren der vorgenannten Ansprüche,
**dadurch gekennzeichnet,**
**dass** in dem Gehäuse (4) zwei oder mehrere zueinander parallel ausgerichtete Antriebsbänder (3) angeordnet sind, die jeweils unabhängig von einem der Motoren (21) antreibbar sind, dass die Geschwindigkeit (v₁, v₂) der beiden Antriebsbänder (3) relativ zueinander einstellbar ist und dass beide Antriebsbänder (3) gemeinsam jeweils eine oder mehrere der Förderleisten (11) bzw. den Behälter antreiben.

10. Fördervorrichtung nach einem oder mehreren der vorgenannten Ansprüche,
**dadurch gekennzeichnet,**
**dass** an dem Gehäuse (4) ein Fahrzeuggestell (18) befestigt ist und dass das Antriebsband (3) und die Förderleisten (11) eine Antriebseinrichtung für das Fahrzeuggestell (18) bilden .

11. Fördervorrichtung nach einem oder mehreren der vorgenannten Ansprüche 1 bis 9,
**dadurch gekennzeichnet,**
**dass** an zwei oder mehreren räumlich voneinander getrennten Gehäusen (4) ein Fahrzeuggestell (18) angebracht ist und dass das Antriebsband (3) und die mit diesem über ein Magnetfeld verbundenen Förderleisten (11) jedes Gehäuses (4) eine Antriebseinrichtung für das Fahrzeuggestell (18) bilden.

12. Fördervorrichtung nach einem oder mehreren der vorgenannten Ansprüche,
**dadurch gekennzeichnet,**
**dass** die Permanentmagnete (12) in einem im Querschnitt eine geometrische Form aufweisenden, z. B. T-, halbkreis-, Y-förmig oder quadratisch gestalteten Aufnahmekörper (5) eingesetzt sind, dass der erste Schenkel (5') des Aufnahmekörpers (5) fest mit dem Antriebsband (3) verbunden und parallel zu diesem ausgerichtet ist und dass in den zweiten Schenkel (5") des Aufnahmekörpers (5) einer oder mehrere der Permanentmagnete (6) fluchtend oder versetzt zueinander eingesetzt ist bzw. sind.

13. Fördervorrichtung nach einem oder mehreren der vorgenannten Ansprüche,
**dadurch gekennzeichnet,**
**dass** das Antriebsband (3) aus einer Vielzahl von Kettengliedern besteht, die zu einer umlaufenden Kette zusammengeschlossen sind, oder als Zahnriemen ausgebildet ist.

14. Fördervorrichtung nach einem oder mehreren der vorgenannten Ansprüche,
**dadurch gekennzeichnet,**
**dass** an der Förderleiste (11) eine Dichtlippe angebracht ist, die unter Vorspannung auf der Auflagefläche (24) anliegt.

15. Fördervorrichtung nach einem oder mehreren der vorgenannten Ansprüche,
**dadurch gekennzeichnet,**
**dass** an dem dem Antriebsband (3) zugewandten Gehäuseinnenseite (4) eine Gleitschicht vorgesehen ist, durch die die Permanentmagnete (6) von dem Gehäuse (4) beabstandet sind.
